# EUROPÄISCHE PATENTSCHRIFT

(11) **EP 3 540 313 B1**
(45) Veröffentlichungstag und Bekanntmachung des Hinweises auf die Patenterteilung: **06.10.2021**
(21) Anmeldenummer: 19162730.6
(22) Anmeldetag: 14.03.2019
(51) Int. Cl.: F23R 3/28

(54) **BRENNKAMMERBAUGRUPPE MIT BRENNERDICHTUNG UND DÜSE SOWIE EINER LEITSTRÖMUNGSERZEUGUNGSEINRICHTUNG**
COMBUSTION CHAMBER COMPONENT WITH BURNER SEAL AND NOZZLE AND A GUIDE FLOW GENERATION DEVICE
MODULE DE CHAMBRE DE COMBUSTION COMPRENANT UN JOINT POUR BRÛLEUR ET UNE BUSE, AINSI QU'UN DISPOSITIF DE GÉNÉRATION DU COURANT D'APPEL

(30) Priorität: 15.03.2018 DE 102018106051
(43) Veröffentlichungstag der Anmeldung: 18.09.2019
(73) Patentinhaber: Rolls-Royce Deutschland Ltd & Co KG, 15827 Blankenfelde-Mahlow (DE)
(72) Erfinder: STAUFER, Max Dr., 15827 Blankenfelde-Mahlow (DE)
(74) Vertreter: Maikowski & Ninnemann Patentanwälte Partnerschaft mbB

(56) Entgegenhaltungen:
- DE-A1- 19 508 111
- US-A- 4 934 145
- US-A1- 2013 036 739
- US-A1- 2015 159 874

## Beschreibung

Die vorgeschlagene Lösung betrifft eine Brennkammerbaugruppe mit einer Brennerdichtung und einer Düse für eine Brennkammer eines Triebwerks zur Bereitstellung eines Kraftstoff-Luft-Gemisches an einer Düsenaustrittsöffnung der Düse.

Eine (Einspritz-) Düse für eine Brennkammer eines Triebwerks, insbesondere für eine Ringbrennkammer eines Gasturbinentriebwerks umfasst einen die Düsenaustrittsöffnung aufweisenden Düsenhauptkörper, der neben einem Kraftstoffleitkanal zur Förderung von Kraftstoff an die Düsenaustrittsöffnung mehrere (mindestens zwei) Luftleitkanäle zur Förderung von mit dem Kraftstoff zu vermischender Luft an die Düsenaustrittsöffnung aufweist. Eine Düse dient üblicherweise auch zum Verdrallen der zugeführten Luft, die dann, mit dem zugeführten Kraftstoff gemischt, an der Düsenaustrittsöffnung der Düse in die Brennkammer gefördert wird und ist in einer Durchgangsöffnung einer Brennerdichtung gehalten. Mehrere Düsen sind beispielsweise in einer Düsenbaugruppe einer Brennkammerbaugruppe zusammengefasst, die mehrere nebeneinander, üblicherweise entlang einer Kreislinie angeordnete Düsen zur Einbringung von Kraftstoff in die Brennkammer umfasst.

Aus dem Stand der Technik, zum Beispiel der US 9 423 137 B2 oder der US 5 737 921 A, bekannte Düsen mit mehreren Luftleitkanälen und mindestens einem Kraftstoffleitkanal sehen vor, dass sich ein erster Luftleitkanal entlang einer Düsenlängsachse des Düsenhauptkörpers erstreckt und ein Kraftstoffleitkanal gegenüber dem ersten Luftleitkanal, bezogen auf die Düsenlängsachse, radial weiter außen liegt. Mindestens ein weiterer Luftleitkanal ist dann zusätzlich gegenüber dem Kraftstoffleitkanal, bezogen auf die Düsenlängsachse, radial weiter außen liegend vorgesehen. Ein Ende des Kraftstoffleitkanals, an dem Kraftstoff aus dem Kraftstoffleitkanal in Richtung der Luft aus dem ersten Luftleitkanal ausströmt, liegt hierbei typischerweise bezogen auf die Düsenlängsachse und in Richtung der Düsenaustrittsöffnung vor dem Ende des zweiten Luftleitkanals, aus dem Luft dann in Richtung eines Gemisches aus Luft aus dem ersten Luftleitkanal und Kraftstoff aus dem Kraftstoffleitkanal ausströmt. Aus dem Stand der Technik ist ferner bekannt und beispielsweise auch in der US 9 423 137 B2 oder der US 5 737 921 A vorgesehen, eine solche Düse mit einem dritten Luftleitkanal zu versehen, dessen gegebenenfalls radial nach außen versetztes Ende in axialer Richtung auf das Ende des zweiten Luftleitkanals folgt.

Aus dem Stand der Technik ist ferner bekannt, an einem im Bereich der Düsenaustrittsöffnung liegenden Ende eines radial außen liegenden Luftleitkanals ein Luftleitelement zur Führung aus dem mindestens einen weiteren Luftleitkanal strömender Luft vorzusehen. Über ein solches Luftleitelement wird die aus dem weiteren Luftleitkanal ausströmende, üblicherweise verdrallte Luft radial nach innen umgelenkt, um eine Vermischung mit dem Kraftstoff aus dem Kraftstoffleitkanal und der zusätzlichen Luft insbesondere aus dem ersten, inneren Luftleitkanal zu erreichen. Hierüber soll eine Spraywolke mit Kraftstoff-Luft-Gemisch erzeugt werden, in der der Kraftstoff in fein verteilten Tropfen vorliegt.

Ferner wird über das Luftleitelement die an der Düsenaustrittsöffnung austretende Luft und das an der Düsenaustrittsöffnung austretende Kraftstoff-Luft-Gemisch in eine radial nach außen weisende Abströmrichtung geführt. Diese bereits teilweise durch das Luftleitelement an dem Düsenhauptkörper vorgegebene Abströmrichtung wird üblicherweise durch ein Strömungsleitelement an der Brennerdichtung (zusätzlich) gesteuert. Ein solches Strömungsleitelement ist durch einen axialen Überstand an der Brennerdichtung ausgebildet, der bei bestimmungsgemäß montierter Brennkammerbaugruppe in Richtung der Brennkammer ragt und typischerweise einen radial nach außen weisenden, sich aufweitenden Endabschnitt aufweist. Die gezielte Führung der an der Düsenaustrittsöffnung austretenden Luft und insbesondere des an der Düsenaustrittsöffnung austretenden Kraftstoff-Luft-Gemisches beeinflusst maßgeblich die Durchmischung in dem Kraftstoff-Luft-Gemisch und hierüber die bei der Verbrennung entstehenden Emissionen, insbesondere die Rußbildung. Im Betrieb des Triebwerks ist ein Strömungsleitelement der Brennerdichtung den hohen in der Brennkammer herrschenden Temperaturen ausgesetzt und muss daher häufig aufwendig gekühlt werden. Dennoch kommt es nicht selten zu temperaturbedingten Beschädigungen und Verschleißerscheinungen an einem Strömungsleitelement der Brennerdichtung. Regelmäßig ist dann ein Austausch der Brennerdichtung notwendig.

Weitere Brennkammerbaugruppen sind in der US 2013/036739 A1, der US 2015/159874 A1, der US 4 934 145 A und der DE 195 08 111 A1 beschrieben. Es besteht somit Bedarf an einer in dieser Hinsicht verbesserten Brennkammerbaugruppe. Diese Aufgabe ist mit einer Brennkammerbaugruppe nach Anspruch 1 gelöst.

Hiernach ist eine Brennkammerbaugruppe mit einer Brennkammer mit einer Kopfplatte, einer Düse, einem Hitzeschild und einer Brennerdichtung, die schwimmend zwischen dem Hitzeschild und der Kopfplatte gelagert ist und eine Durchgangsöffnung aufweist, in der die Düse positioniert ist, vorgeschlagen, bei der die Düse einen die Düsenaustrittsöffnung aufweisenden Düsenhauptkörper umfasst, der sich entlang einer Düsenlängsachse erstreckt und der wenigstens das Folgende umfasst:
- mindestens einen sich entlang der Düsenlängsachse erstreckenden (ersten) inneren Luftleitkanal zur Förderung von Luft an die Düsenaustrittsöffnung,
- mindestens einen gegenüber dem inneren Luftleitkanal, bezogen auf die Düsenlängsachse, radial weiter außen liegenden Kraftstoffleitkanal zur Förderung von Kraftstoff an die Düsenaustrittsöffnung und
- mindestens ein gegenüber dem inneren Luftleitkanal und dem Kraftstoffleitkanal, bezogen auf die Düsenlängsachse, radial außen liegendes Luftleitelement zur Führung an der Düsenaustrittsöffnung austretender Luft und des an der Düsenaustrittsöffnung austretenden Kraftstoff-Luft-Gemisches in eine radial nach außen weisende Abströmrichtung.

Zusätzlich zu dem mindestens einen Luftleitelement ist eine Leitströmungserzeugungseinrichtung vorgesehen, die eingerichtet ist, wenigstens eine Leitströmung zu erzeugen, die an der Düsenaustrittsöffnung austretende Luft und das an der Düsenaustrittsöffnung austretende Kraftstoff-Luft-Gemisch radial berandet und einen maximalen Abströmwinkel für die Abströmrichtung bezüglich der Düsenlängsachse vorgibt und begrenzt, unter dem an der Düsenaustrittsöffnung austretende Luft und das an der Düsenaustrittsöffnung austretende Kraftstoff-Luft-Gemisch radial nach außen abströmen kann. Die Leitströmungserzeugungsrichtung ist zumindest teilweise an der Düse und/oder an der Brennerdichtung vorgesehen.

Für die Erzeugung wenigstens eines Teils der Leitströmung ist mindestens eine Zuströmöffnung der Leitströmungserzeugungseinrichtung an der Brennerdichtung vorgesehen. Die Brennerdichtung integriert somit eine Zuströmöffnung, die als Bestandteil der Leitströmungserzeugungseinrichtung wirkt. Bei der Zuströmöffnung handelt es sich somit nicht um eine Kühlluftöffnung, um beispielsweise Kühlluft an ein Strömungsleitelement der Brennerdichtung heran zu führen. Durch die Zuströmöffnung einströmendes Fluid, insbesondere Luft dient hier vielmehr der Erzeugung der den maximalen Abströmwinkel vorgebenden und begrenzenden Leitströmung. Die Zuströmöffnung ist eingerichtet, über die Zuströmöffnung einströmendes Fluid, insbesondere über die Zuströmöffnung einströmende Luft, in Richtung auf eine radial äußere Mantelfläche der Düse zu leiten.

Die mindestens eine Zuströmöffnung gibt hierbei eine zur Düsenlängsachse radial nach innen geneigte Strömungsrichtung für über die Zuströmöffnung einströmendes Fluid, insbesondere für über die Zuströmöffnung einströmende Luft vor, und zwischen einem Strömungsleitelement der Brennerdichtung und einem Abschnitt der radial äußeren Mantelfläche der Düse ist ein Zusatzleitkanal gebildet und die Zuströmöffnung ist eingerichtet, über die Zuströmöffnung einströmendes Fluid, insbesondere über die Zuströmöffnung einströmende Luft in den Zusatzleitkanal zu leiten.

Die Zuströmöffnung definiert demzufolge einen Zuströmkanal, der ein Fluid von außen durch die Brennerdichtung führt und entlang einer radial nach innen geneigten Strömungsrichtung ausströmen lässt.

Alternativ wird über die mindestens eine Zuströmöffnung in Richtung des Brennraums einströmende Luft radial nach innen und auf die radial äußere Mantelfläche der Düse geleitet, und die Leitströmungserzeugungseinrichtung gibt einen maximalen Abströmwinkel für die Abströmrichtung bezüglich der Düsenlängsachse vor, ohne dass ein in Richtung der Abströmrichtung vorstehendes Strömungsleitelement an der Brennerdichtung ausgebildet ist.

Beispielsweise ist die Zuströmöffnung eingerichtet, über die Zuströmöffnung einströmende Luft auf eine radial äußere Mantelfläche des radial außen liegenden Luftleitelements des Düsenhauptkörpers zu leiten. An dieser radial äußeren Mantelfläche des radial außen liegenden Luftleitelements kann die Strömung aus der Zuströmöffnung an der Brennerdichtung entlang geführt und/oder radial nach außen geführt werden, um einen Teil der Leitströmung zu definieren.

Im Rahmen der vorgeschlagenen Lösung ist somit beispielsweise zusätzlich zu einem radial außen liegenden und gegebenenfalls axial vorstehenden Luftleitelement des Düsenhauptkörpers eine Leitströmungserzeugungseinrichtung an der Düse und/oder der Brennerdichtung der Brennkammerbaugruppe vorgesehen, die eingerichtet ist, wenigstens eine Leitströmung aus Luft oder einem anderen Fluid zu erzeugen um insbesondere das an der Düsenaustrittsöffnung austretende Kraftstoff-Luft-Gemisch innerhalb eines vorgegebenen Abströmwinkels, sowie gegebenenfalls eines hierdurch definierten Abströmkegels, zu halten. Die durch die Leitströmungserzeugungseinrichtung erzeugte Leitströmung gibt dann den Abströmwinkel vor, unter dem eine Strömung aus der an der Düsenaustrittsöffnung austretenden Luft und insbesondere des an der Düsenaustrittsöffnung austretenden Kraftstoff-Luft-Gemisches maximal geneigt zur Düsenlängsachse radial nach außen verlaufen kann. Die Leitströmung gibt somit eine maximal zu Düsenlängsachse geneigte Abströmrichtung vor, der ein äußerster Rand der Strömung aus der Düsenaustrittsöffnung austretender Luft und des an der Düsenaustrittsöffnung austretenden Kraftstoff-Luft-Gemisches folgt.

Über eine gezielt erzeugte Leitströmung wird somit insbesondere dem austretenden Kraftstoff-Luft-Gemisch eine bestimmte Abströmcharakteristik vorgegeben und eine Ausbreitung einer Gemischströmung des Kraftstoff-Luft-Gemisches - über den maximal zulässigen, durch die Leitströmung vorgegebenen Abströmwinkel - begrenzt. Dies schließt insbesondere die Erzeugung einer (Luft-) Leitströmung über die Leitströmungserzeugungseinrichtung ein, die einen Abströmkegel definiert, innerhalb dessen das an der Düsenaustrittsöffnung austretende Kraftstoffluft-Gemisch verbleibt. Ein radial außen liegendes Luftleitelement kann folglich zwar weiterhin, für Erzeugung des Kraftstoff-Luft-Gemischs, insbesondere zur Führung aus einem Luftleitkanal austretender Luft radial nach innen dienen sowie eine Führung des sich ergebenden Kraftstoff-Luft-Gemisches radial nach außen unterstützen. Ein zusätzliches Strömungsleitelement an der Brennerdichtung kann aber entfallen oder zumindest verkürzt werden, da die maßgebliche (weitere) Führung des Kraftstoff-Luft-Gemisches radial nach außen und die Begrenzung eines Abströmwinkels von einer gezielt über die Leitströmungserzeugungseinrichtung erzeugten Leitströmung übernommen wird.

Grundsätzlich kann die Düse der Brennkammerbaugruppe zusätzlich zu dem inneren (ersten) Luftleitkanal einen oder mehrere weitere (zweite und/oder dritte) radial weiter außen liegende Luftleitkanäle aufweisen. Ein Ende eines solchen Luftleitkanals, an dem die Luft aus dem jeweiligen Luftleitkanal in Richtung der Düsenaustrittsöffnung austritt, liegt dann gegenüber dem Luftleitelement radial weiter innen und die Luftströmungserzeugungseinrichtung ist stets zusätzlich zu dem inneren Luftleitkanal und etwaigen weiteren Luftleitkanälen vorgesehen.

In einer Ausführungsvariante weist die Düse zusätzlich zu dem inneren (ersten) Luftleitkanal mindestens einen weiteren (zweiten), radial weiter außen liegenden Luftleitkanal auf, an dessen Ende das mindestens eine Luftleitelement vorgesehen ist.

Grundsätzlich kann die Leitströmungserzeugungseinrichtung zur Erzeugung einer radial äußersten und gegebenenfalls ein sich ergebendes Kraftstoff-Luft-Gemisch kreisringförmig einhüllenden Leitströmung eingerichtet und vorgesehen sein, um den maximalen Abströmwinkel für die radial nach außen weisende Abströmrichtung des Kraftstoff-Luft-Gemisches bezüglich der Düsenlängsachse vorzugeben und zu begrenzen. In einer Ausführungsvariante ist mindestens ein Bestandteil der Leitströmungserzeugungseinrichtung, insbesondere ein an der Erzeugung der Leitströmung mitwirkender Bestandteil, bezogen auf die Düsenlängsachse, gegenüber dem mindestens einen radial außen liegenden Luftleitelement radial weiter innen oder radial weiter außen vorgesehen. Ein radial weiter innen vorgesehener Bestandteil ist hierbei beispielsweise an der Düse und insbesondere an dem Düsenhauptkörper, während ein radial weiter außen vorgesehener Bestandteil an der Brennerdichtung vorgesehen ist.

Im Betrieb des Triebwerks wird mithilfe der Zuströmöffnung Luft in einen zwischen einem Strömungsleitelement der Brennerdichtung und einem Abschnitt der radial äußeren Mantelfläche gebildeten Zusatzleitkanal geleitet, an dessen Ende die Leitströmung oder zumindest ein Teil dieser Leitströmung unter dem vorgegebenen Abströmwinkel austritt. Dementsprechend kann sich der Zusatzleitkanal beispielsweise axial bezüglich der Düsenlängsachse erstrecken und zur Erzeugung der die Abströmrichtung und insbesondere den Abströmwinkel vorgebenden Leitströmung am Ende des Düsenhauptkörpers führen.

Ein für die Bildung des Zusatzleitkanals vorgesehenes Strömungsleitelement der Brennerdichtung kann an einem im Bereich der Düsenaustrittsöffnung liegenden Ende axial bezüglich der Düsenlängsachse verlaufen, d.h., ohne einen sich radial nach außen erstreckenden und sich radial nach außen aufweitenden Endabschnitt auszubilden, über den das aus der Düsenaustrittsöffnung austretende Kraftstoff-Luft-Gemisch geführt werden würde. Die Führung des Kraftstoff-Luft-Gemisches wird hier vielmehr über die aus dem Zusatzleitkanal austretende Leitströmung geleistet, sodass ein Strömungsleitelement der Brennerdichtung nur mit einer vergleichsweise geringen Länge in Richtung der Brennkammer axial vorragen muss. Ein temperaturbedingter Verschleiß des Strömungsleitelements aufgrund der in der Brennkammer herrschenden hohen Temperaturen lässt sich derart erheblich reduzieren oder sogar vermeiden.

In der alternativen Ausführungsform weist die Brennerdichtung im Bereich der Düsenaustrittsöffnung kein Strömungsleitelement auf. Mithin weist die Brennerdichtung keinen axial vorstehenden Überstand auf, der bei bestimmungsgemäßer Montage der Brennkammerbaugruppe in Richtung einer Brennkammer des Triebwerks ragt, insbesondere über das Luftleitelement der Düse axial hinaus ragt. Hierdurch wird die Führung des Kraftstoff-Luft-Gemisches nicht durch ein brennerdichtungsseitiges Strömungsleitelement, sondern vornehmlich von der mithilfe der Leitströmungserzeugungseinrichtung im Betrieb des Triebwerks erzeugten Leitströmung auf einen vorgegebenen Abströmwinkel begrenzt.

Unabhängig davon, ob an der Brennerdichtung ein Strömungsleitelement vorgesehen ist oder nicht, kann in einer Ausführungsvariante für die Erzeugung wenigstens eines Teils der Leitströmung mindestens ein Führungselement der Leitströmungserzeugungseinrichtung an der Düse vorgesehen sein. Das Führungselement als Bestandteil der Leitströmungserzeugungseinrichtung ist hier folglich an der Düse und insbesondere als Teil des Düsenhauptkörpers ausgebildet, beispielsweise im Bereich der Düsenaustrittsöffnung.

In einer hierauf basierenden Ausführungsvariante ist das mindestens eine Führungselement unter Bildung eines Luftleitspalts zu dem radial außen liegenden Luftleitelement beabstandet. Das mindestens eine Führungselement liegt somit gegenüber dem Luftleitelement radial weiter innen und bildet zusammen mit einem Abschnitt des Luftleitelements den Luftleitspalt. Dieser Luftleitspalt kann insbesondere sich düsenartig verengend ausgebildet sein, um eine entsprechend beschleunigte Luftströmung für die Leitströmung zu erzeugen. Hierbei ist die Düse ausgebildet und eingerichtet, aus wenigstens einem Luftleitkanal ausströmende Luft zu dem zwischen dem mindestens einen Führungselement und dem Luftleitelement gebildeten Luftleitspalt zu führen, aus dem dann ein Teil der den Abströmwinkel vorgebenden und begrenzenden Leitströmung austritt.

Mittels des mindestens einen Führungselements kann somit insbesondere ein Luftstrahl (englisch "air jet") für die Leitströmung erzeugbar sein. Dieser Luftstrahl weist unter dem Abströmwinkel radial nach außen und begrenzt radial die an der Düsenaustrittsöffnung austretende Luft und das an der Düsenaustrittsöffnung austretende Kraftstoff-Luft-Gemisch. Der Luftstrahl tritt hierbei in einer Ausführungsvariante aus dem mithilfe des mindestens einen Führungselements gebildeten Luftleitspalts mit einer Strömungsgeschwindigkeit an der Düsenaustrittsöffnung aus, die höher - gegebenenfalls um wenigstens 3%, 5%, 10%, 15% oder 20% höher - ist als eine Strömungsgeschwindigkeit der an der Düsenaustrittsöffnung austretenden Luft und des an der Düsenaustrittsöffnung austretenden Kraftstoff-Luft-Gemisches. Das mindestens eine Führungselement ist somit zur Erzeugung eines Luftstrahls mit entsprechend erhöhter Strömungsgeschwindigkeit für die Leitströmung eingerichtet. Über das mindestens eine Führungselement wird hierbei ein Teil der an der Düsenaustrittsöffnung zur Verfügung stehenden und aus dem mindestens einen Luftleitkanal der Düse stammenden Luft entsprechend umgelenkt und beschleunigt, um hiermit die Leitströmung vorzugeben, die den maximalen Abströmwinkel vorgibt.

Im Zuge der vorgeschlagenen Lösung ist ferner ein Triebwerk, insbesondere ein Gasturbinentriebwerk mit mindestens einer Brennkammerbaugruppe vorgesehen.

Die beigefügten Figuren anschaulichen exemplarisch mögliche Ausführungsvarianten der vorgeschlagenen Lösung.

Hierbei zeigen:
- Figur 1: ausschnittsweise eine erste Ausführungsvariante einer vorgeschlagenen Brennkammerbaugruppe, mit einer Leitströmungserzeugungseinrichtung, die zur Erzeugung einer den radial Abströmwinkel eines Kraftstoff-Luft-Gemisches an einer Düsenaustrittsöffnungen begrenzenden Leitströmung einen Zusatzleitkanal zwischen einem verkürzten Strömungsleitelement einer Brennerdichtung und einer radial äußeren Mantelfläche einer Düse ausbildet;
- Figur 2: in mit der Figur 1 übereinstimmender Ansicht eine weitere Ausführungsvariante einer vorgeschlagenen Brennkammerbaugruppe, mit einer Brennerdichtung ohne Strömungsleitelement und einem düsenseitigen Führungselement einer Leitströmungserzeugungseinrichtung zur Erzeugung eines radial nach außen gerichteten Luftstrahls für die Leitströmung;
- Figur 3A: ein Triebwerk, in dem die Ausführungsvarianten der Figuren 1 bis 6 zum Einsatz kommt;
- Figur 3B: ausschnittsweise und in vergrößertem Maßstab die Brennkammer des Triebwerks der Figur 3A;
- Figur 3C: in Querschnittsansicht den grundsätzlichen Aufbau einer Düse gemäß dem Stand der Technik und die umliegenden Komponenten des Triebwerks im eingebauten Zustand der Düse;
- Figur 3D: eine Rückansicht auf eine Düsenaustrittsöffnung unter Darstellung von Verdrallelementen, die in radial außen liegenden Luftleitkanälen der Düse vorgesehen sind.

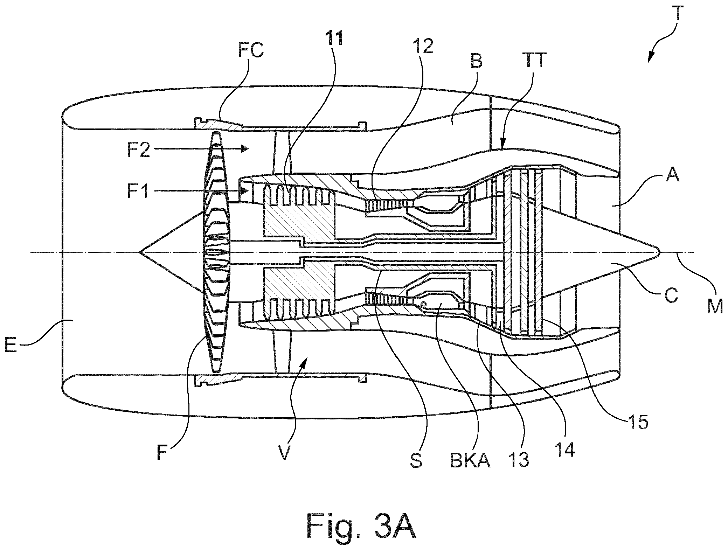

Die Figur 3A veranschaulicht schematisch und in Schnittdarstellung ein (Turbofan-) Triebwerk T, bei dem die einzelnen Triebwerkskomponenten entlang einer Rotationsachse oder Mittelachse M hintereinander angeordnet sind und das Triebwerk T als Turbofan-Triebwerk ausgebildet ist. An einem Einlass oder Intake E des Triebwerks T wird Luft entlang einer Eintrittsrichtung mittels eines Fans F angesaugt. Dieser in einem Fangehäuse FC angeordnete Fan F wird über eine Rotorwelle S angetrieben, die von einer Turbine TT des Triebwerks T in Drehung versetzt wird. Die Turbine TT schließt sich hierbei an einen Verdichter V an, der beispielsweise einen Niederdruckverdichter 11 und einen Hochdruckverdichter 12 aufweist, sowie gegebenenfalls noch einen Mitteldruckverdichter. Der Fan F führt einerseits in einem Primärluftstrom F1 dem Verdichter V Luft zu sowie andererseits, zur Erzeugung des Schubs, in einem Sekundärluftstrom F2 einem Sekundärstromkanal oder Bypasskanal B. Der Bypasskanal B verläuft hierbei um ein den Verdichter V und die Turbine TT umfassendes Kerntriebwerk, das einen Primärstromkanal für die durch den Fan F dem Kerntriebwerk zugeführte Luft umfasst.

Die über den Verdichter V in den Primärstromkanal geförderte Luft gelangt in einen Brennkammerabschnitt BKA des Kerntriebwerks, in dem die Antriebsenergie zum Antreiben der Turbine TT erzeugt wird. Die Turbine TT weist hierfür eine Hochdruckturbine 13, eine Mitteldruckturbine 14 und einen Niederdruckturbine 15 auf. Die Turbine TT treibt dabei über die bei der Verbrennung frei werdende Energie die Rotorwelle S und damit den Fan F an, um über die die in den Bypasskanal B geförderte Luft den erforderlichen Schub zu erzeugen. Sowohl die Luft aus dem Bypasskanal B als auch die Abgase aus dem Primärstromkanal des Kerntriebwerks strömen über einen Auslass A am Ende des Triebwerks T aus. Der Auslass A weist hierbei üblicherweise eine Schubdüse mit einem zentral angeordneten Auslasskonus C auf.

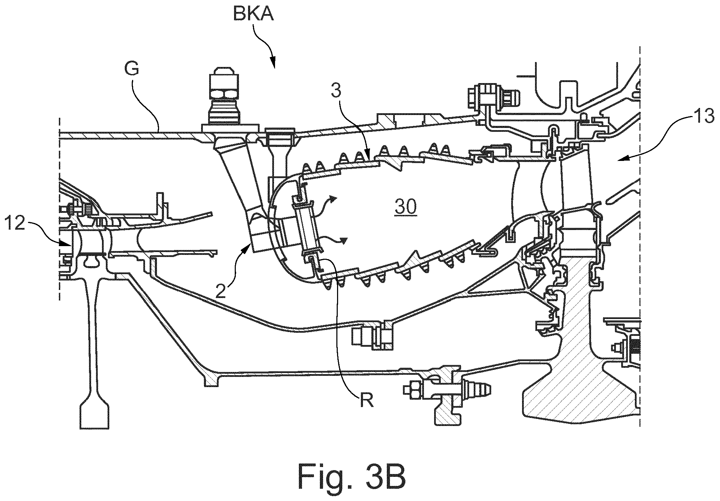

Die Figur 3B zeigt einen Längsschnitt durch den Brennkammerabschnitt BKA des Triebwerks T. Hieraus ist insbesondere in eine (Ring-) Brennkammer 3 des Triebwerks T ersichtlich. Zur Einspritzung von Kraftstoff respektive eines Luft-Kraftstoff-Gemisches in einen Brennraum 30 der Brennkammer 3 ist eine Düsenbaugruppe vorgesehen. Diese umfasst einen Brennkammerring R, an dem entlang einer Kreislinie um die Mittelachse M mehrere (Kraftstoff / Einpritz-) Düsen 2 angeordnet sind. Hierbei sind an dem Brennkammerring R die Düsenaustrittsöffnungen der jeweiligen Düsen 2 vorgesehen, die innerhalb der Brennkammer 3 liegen. Jede Düse 2 umfasst dabei einen Flansch, über den eine Düse 2 an ein Außengehäuse G der Brennkammer 3 geschraubt ist.

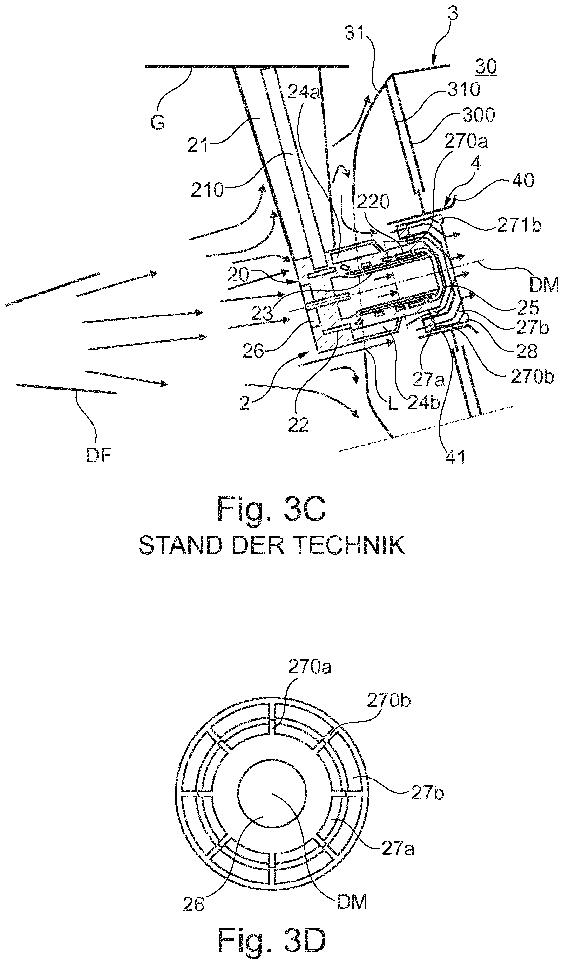

Die Figur 3C zeigt nun in Querschnittsansicht den grundsätzlichen Aufbau einer Düse 2 sowie die umliegenden Komponenten des Triebwerks T im eingebauten Zustand der Düse 2. Die Düse 2 ist hierbei Teil einer Brennkammerbaugruppe des Triebwerks T. Die Düse 2 befindet sich stromab eines Diffusors DF und wird bei der Montage durch ein Zugangsloch L durch einen Brennkammerkopf 31, durch ein Hitzeschild 300 und eine Kopfplatte 310 der Brennkammer 3 bis zum Brennraum 30 der Brennkammer 3 eingeschoben, sodass eine an einem Düsenhauptkörper 20 ausgebildete Düsenaustrittsöffnung in den Brennraum 30 reicht. Die Düse 2 ist hierbei über einen Lagerabschnitt 41 einer Brennerdichtung 4 an der Brennkammer 3 positioniert und in einer Durchgangsöffnung des Lagerabschnitts 41 gehalten. Die Brennerdichtung 4 ist Teil der die Düse 2 umfassenden Brennkammerbaugruppe.

Die Düse 2 umfasst ferner einen sich im Wesentlichen radial bezüglich der Mittelachse M erstreckenden Düsenstamm 21, in dem eine Kraftstoffzuleitung 210 untergebracht ist, die Kraftstoff zu dem Düsenhauptkörper 20 fördert. Am Düsenhauptkörper 20 sind ferner eine Kraftstoffkammer 22, Kraftstoffpassagen 220, Hitzeschilde 23 sowie Luftkammern 24a, 24b zur Isolation ausgebildet. Zusätzlich bildet der Düsenhauptkörper 20 einen mittig entlang einer Düsenlängsachse DM in einer axialen Richtung x verlaufenden (ersten) inneren Luftleitkanal 26 und hierzu radial weiter außen liegende (zweite und dritte) äußere Luftleitkanäle 27a und 27b aus. Diese Luftleitkanäle 26, 27a und 27b erstrecken sich in Richtung der Düsenaustrittsöffnung der Düse 2.

Des Weiteren ist wenigstens ein Kraftstoffleitkanal 26 an dem Düsenhauptkörper 20 ausgebildet. Dieser Kraftstoffleitkanal 25 liegt zwischen dem ersten, inneren Luftleitkanal 26 und dem zweiten äußeren Luftleitkanal 27a. Das Ende des Kraftstoffleitkanals 25, über den im Betrieb der Düse 2 Kraftstoff in Richtung der Luft aus dem ersten, inneren Luftleitkanal 26 ausströmt, liegt, bezogen auf die Düsenlängsachse DM und in Richtung der Düsenaustrittsöffnung, vor einem Ende des zweiten Luftleitkanals 27a, aus dem Luft aus dem zweiten, äußeren Luftleitkanal 27a in Richtung eines Gemisches aus Luft aus dem ersten, inneren Luftleitkanal 26 und Kraftstoff aus dem Kraftstoffleitkanal 25 ausströmt.

In den äußeren Luftleitkanälen 27a und 27b sind Verdrallelemente 270a, 270b zum Verdrallen der hierüber zugeführten Luft vorgesehen. Ferner umfasst der Düsenhauptkörper 20 am Ende des dritten äußeren Luftleitkanals 27b noch ein äußeres, radial nach innen weisendes Luftleitelement 271b. Bei der Düse 2, bei der sich z.B. um eine druckunterstützte Einspritzdüse handelt, folgen entsprechend der Figur 3C, bezogen auf die Düsenlängsachse DM und in Richtung der Düsenaustrittsöffnung, auf das Ende des Kraftstoffleitkanals 25, aus dem im Betrieb des Triebwerks T Kraftstoff der Luft aus dem ersten, inneren, sich mittig erstreckenden Luftleitkanal 26 zugeführt wird, die Enden der zweiten und dritten radial außen liegenden Luftleitkanäle 27a und 27b. Aus diesen zweiten und dritten Luftleitkanälen 27a und 27b gelangt mittels der Verdrallelemente 270a, 270b verdrallte Luft an die Düsenaustrittsöffnung. Wie anhand der Rückansicht der Figur 3D mit Blick auf die Düsenaustrittsöffnung entlang der Düsenlängsachse DM dargestellt ist, sind diese Verdrallelemente 270a, 270b innerhalb des jeweiligen Luftleitkanals 27a, 27b über den Umfang verteilt angeordnet.

Zur Abdichtung der Düse 2 zum Brennraum 30 hin ist an dem Düsenhauptkörper 20 umfangsseitig noch ein Dichtungselement 28 vorgesehen. Dieses Dichtungselement 28 bildet ein Gegenstück zu einer Brennerdichtung 4. Diese Brennerdichtung 4 ist schwimmend zwischen dem Hitzeschild 300 und der Kopfplatte 310 gelagert, um bei verschiedenen Betriebszuständen radiale und axiale Bewegungen zwischen der Düse 2 und der Brennkammer 3 auszugleichen und eine zuverlässige Dichtung zu gewährleisten.

Die Brennerdichtung 4 weist ein Strömungsleitelement 40 zum Brennraum 30 auf. Dieses Strömungsleitelement 40 sorgt in Verbindung mit dem dritten äußeren Luftleitkanal 27b an der Düse 2 für eine gewollte Strömungsführung des Kraftstoff-Luft-Gemischs, das aus der Düse 2, genauer der verdrallten Luft aus den Luftleitkanälen 26, 27a und 27b, sowie dem Kraftstoffleitkanal 25, entsteht.

Bei einer aus dem Stand der Technik bekannten Brennkammerbaugruppe gemäß der Figur 3C übernimmt das Strömungsleitelement 40 der Brennerdichtung 4, das axial über die Düsenaustrittsöffnung vorsteht und in den Brennraum 30 ragt, die Führung des Kraftstoff-Luft-Gemisches radial nach außen unter einem begrenzten Abströmwinkel. Über das an dem Düsenhauptkörper 20 ausgebildete Luftleitelement 271b, das am Ende des radial äußersten, dritten Luftleitkanals 27b vorgesehen ist, wird zwar zusätzlich zu einer Führung der aus dem dritten Luftleitkanal 27b ausströmenden Luft radial nach innen auch eine Führung des Kraftstoff-Luft-Gemischs in einer radial nach außen weisende (Abström) Richtung unterstützt. Eine gezielte Beeinflussung der Abströmcharakteristik des Kraftstoff-Luft-Gemischs im Hinblick auf eine definierte radiale Begrenzung eines Abströmkegels ist hiermit jedoch üblicherweise nicht verbunden. Diese Funktion wird von dem Strömungsleitelement 40 der Brennerrichtung 4 übernommen.

Da das Strömungsleitelement 40 der Brennerdichtung 4 hierfür aber in den Brennraum 30 ragen muss, ist die Brennerdichtung 4 im Betrieb des Triebwerks T thermisch hoch beansprucht. Auch über an der Brennerdichtung 4, üblicherweise im Bereich des Lagerabschnitts 41, vorgesehene Kühlluftöffnungen, über die Kühlluft zu dem Strömungsleitelement 40 geführt wird, lässt sich häufig nicht vermeiden, dass das Strömungsleitelement 40 temperaturbedingt beschädigt wird und die Brennerdichtung 4 im Rahmen einer Wartung des Triebwerks T ausgetauscht werden muss.

In dieser Hinsicht kann eine vorgeschlagene Brennkammerbaugruppe Abhilfe schaffen. Hierbei wird zusätzlich zu mindestens einem Luftleitelement, wie dem Luftleitelement 271b der in der Figur 3C dargestellten Düse 2, eine Leitströmungserzeugungseinrichtung vorgesehen. Diese Leitströmungserzeugungseinrichtung ist eingerichtet, wenigstens eine Leitströmung zu erzeugen, die an der Düsenaustrittsöffnung austretende Luft und das an der Düsenaustrittsöffnung austretende Kraftstoff-Luft-Gemisch radial berandet und einen maximalen Abströmwinkel α für die Abströmrichtung bezüglich der Düsenlängsachse DM - typischerweise dann ohne ein in Richtung der Abströmrichtung weisendes Strömungselement 40 der Brennerdichtung 4 - vorgibt und begrenzt, unter dem an der Düsenaustrittsöffnung austretende Luft und das an der Düsenaustrittsöffnung austretende Kraftstoff-Luft-Gemisch radial nach außen abströmen kann.

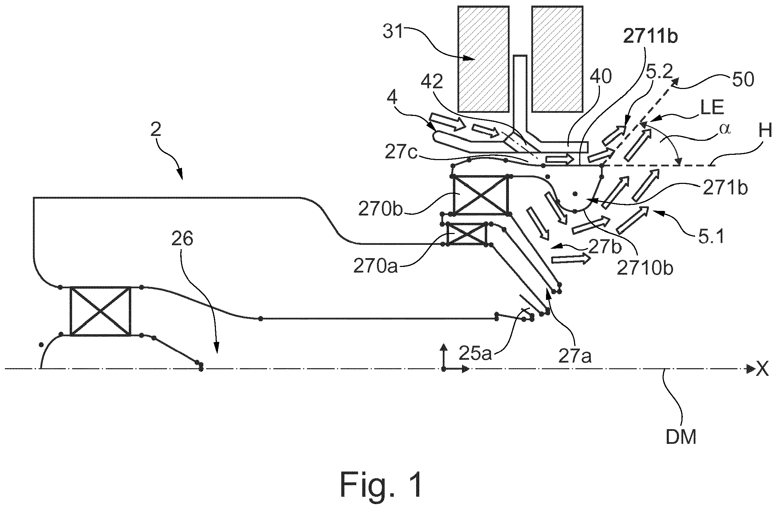

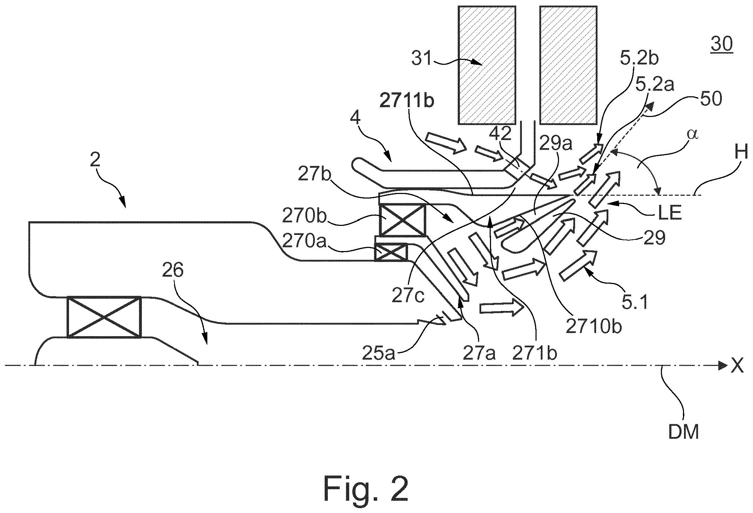

Bei den Ausführungsvarianten der Figuren 1 und 2 ist eine Leitströmungserzeugungseinrichtung LE vorgesehen, die eingerichtet ist, wenigstens eine Leitströmung 5.2, 5.2a/5.2b aus Luft zu erzeugen, die einen maximalen Abströmwinkel α für eine Abströmrichtung 50 bezüglich der Düsenlängsachse DM vorgibt und begrenzt. Die Leitströmungserzeugungseinrichtung LE ist hierbei jeweils zumindest teilweise an der Düse 2 und/oder an der Brennerdichtung 4 vorgesehen. Über die hiermit erzeugbare Leitströmung 5.2, 5.2a/5.2b wird ein Strömungskegel definiert, innerhalb dessen eine Gemischströmung 5.1 des Kraftstoff-Luft-Gemisches verbleibt, ohne dass an der Brennerdichtung 4 ein in den Brennraum 30 hinein ragendes und/oder über das düsenseitige Luftleitelement 271b axial hinaus tragendes Strömungsleitelement 40 vorgesehen werden müsste. Eine radiale Begrenzung und Führung der Gemischströmung 5.1 wird hier vornehmlich oder ausschließlich durch die mithilfe der Leitströmungserzeugungseinrichtung LE erzeugten Leitströmung 5.2, 5.2a/5.2b vorgegeben.

In der Figur 1 ist eine Ausführungsvariante der Brennkammerbaugruppe in gegenüber der Darstellung der Figur 3C vergrößertem Maßstab und ausschnittsweise dargestellt. Die Leitströmungserzeugungseinrichtung LE dieser Ausführungsvariante umfasst mindestens eine Zuströmöffnung 42 an der Brennerdichtung 4 sowie einen Zusatzleitkanal 27c, der zwischen einem verkürzten Strömungsleitelement 40 der Brennerdichtung 4 und einer radial äußeren Mantelfläche 2711b des Luftleitelement 271b gebildet ist. Der Zusatzleitkanal 27c kann zum Beispiel ringförmig oder ringsegmentförmig um die Düsenlängsachse DM umlaufend ausgebildet sein.

Über eine Zuströmöffnung 42 oder mehrere Zuströmöffnungen 42 gelangt von außen Luft durch die Brennerdichtung 4 hindurch an die axial äußere Mantelfläche 2711b des Luftleitelements 271b und in den Zusatzleitkanal 27c. Ein mit der Zuströmöffnung 42 in der Brennerdichtung 4 definierter Strömungskanal verläuft hierbei geneigt zur Düsenlängsachse DM radial nach innen, sodass über die Zuströmöffnung(en) 42 einströmende Luft entlang einer radial nach innen geneigten Strömungsrichtung zur der radial äußeren Mantelfläche 2711b der Düse 2 geleitet wird. An der radial äußeren Mantelfläche 2711b der Düse 2 wird die einströmende Luft umgelenkt und am Ende des Zusatzleitkanals 27c entlang einer radial nach außen weisenden Abströmrichtung 50 geführt. Die aus dem Zusatzleitkanal 27c ausströmende Luftströmung bildet eine Leitströmung 5.2. Diese Leitströmung 5.2 strömt entlang der Abströmrichtung 50 unter einem definierten Abströmwinkel α (mit α im Bereich von 1 bis 75°, insbesondere im Bereich von 15° bis 55° oder im Bereich von 32° bis 47°) geneigt zur Düsenlängsachse DM radial nach außen und begrenzt damit die mögliche Ausbreitung der aus der Düsenaustrittsöffnung austretenden Gemischströmung 5.1 in radialer Richtung.

Über die mit hoher Geschwindigkeit unter dem Abströmwinkel α entlang der Abströmrichtung 50 ausströmende Leitströmung 5.2 ist somit eine aus der Düsenaustrittsöffnung austretende Luftströmung und das an der Düsenaustrittsöffnung austretende Kraftstoff-Luft-Gemisch der Gemischströmung 5.1 radial berandet und insbesondere der Gemischströmung 5.1 ein maximal möglicher Abströmwinkel α vorgegeben und begrenzt. In der Figur 1 ist dabei der Abströmwinkel α der Einfachheit halber bezogen auf eine Bezugsgerade H dargestellt. Diese Bezugsgerade H verläuft parallel zur Düsenlängsachse DM durch den axial äußersten Punkt der äußeren Mantelfläche 2711b der Düse 2 und mithin durch eine an der Düse 2 definierte Abströmkante der Leitströmung 5.2.

Über eine Innenkontur 2710b des Luftleitelements 271b ist am Ende des dritten Luftleitkanals 27b aus dem dritten Luftleitkanal 27b ausströmende Luft radial nach innen umgelenkt, um eine Vermischung der Luft mit dem eingespritzten Kraftstoff zu erreichen. Über die in der Querschnittsdarstellung konvex nach innen gewölbte Innenkontur 2710b des Luftleitelements 271b wird hierbei auch erreicht, dass an der Düsenaustrittsöffnung austretende Luft und das an der Düsenaustrittsöffnung austretende Kraftstoff-Luft-Gemisch radial nach außen geführt wird. Eine gezielte Steuerung des maximal möglichen Abströmwinkel α und eine Begrenzung dieses Abströmwinkel α ist über das Luftleitelement 271b jedoch nicht erreicht. Hierfür ist die mittels der Leitströmungserzeugungseinrichtung LE erzeugte Leitströmung 5.1 vorgesehen.

Aufgrund der erzeugbaren Leitströmung 5.1 kann das Strömungsleitelement 40 der Brennerrichtung 4 gegenüber der aus dem Stand der Technik vorbekannten Brennkammerbaugruppe gemäß der Figur 3C in der Ausführungsvariante der Figur 1 deutlich verkürzt werden und ragt insbesondere axial nicht über das Luftleitelement 271b hinaus. Das Strömungsleitelement 40 ist somit im Betrieb des Triebwerks T in deutlich geringerem Maße thermisch beansprucht. Da dem Strömungsleitelement 40 darüber hinaus eine Strömungsleitungsfunktion nur im Zusammenhang mit dem axial und im Wesentlichen parallel zur Düsenlängsachse DM verlaufenden Zusatzleitkanal 27c zukommt, das Strömungsleitelement 40 jedoch nicht für die Führung der Gemischströmung 5.1 stromab der Düsenaustrittsöffnung eingerichtet ist, weist das Strömungsleitelement 40 der Ausführungsvariante der Figur 1 auch keinen radial nach außen weisenden und sich aufweitenden Endabschnitt auf.

Bei der Ausführungsvariante der Figur 2 ist die Brennerdichtung 4 gänzlich ohne entlang der axialen Richtung x vorstehendes Strömungsleitelement 40 ausgebildet. Teil der Leitströmungserzeugungseinrichtung LE ist aber auch hier eine Zuströmöffnung 42 respektive mehrere über den Umfang der Brennerdichtung 4 verteilte Zuströmöffnungen 42 zur Erzeugung eines Teils einer den Abströmwinkel α vorgegebenen Leitströmung 5.2a/5.2b. Über die Zuströmöffnung(en) 42 in Richtung des Brennraums 30 einströmende Luft wird dabei auch bei der Ausführungsvariante der Figur 2 radial nach innen geleitet, und zwar auf die radial äußere Mantelfläche 2711b der Düse 2 zu. An dieser radial äußeren Mantelfläche 2711b wird die über die Zuströmöffnung(en) 42 einströmende Luft in Richtung der Abströmrichtung 50 umgelenkt, sodass hiermit einen Teil der Leitströmung 5.2a/5.2b gebildet ist.

Zusätzlich zu diesem gegenüber dem Luftleitelement 271b radial weiter außen liegenden Bestandteil der Leitströmungserzeugungseinrichtung LE ist bei der Ausführungsvariante der Figur 2 weiterhin ein düsenseitiger und radial weiter innen liegender Bestandteil der Leitströmungserzeugungseinrichtung LE in Form mindestens eines Führungselements 29 vorgesehen. Dieses Führungselement 29 ist unter Bildung eines Luftleitspalts 29a zu dem Luftleitelement 271b beabstandet. Der Luftleitspalt 29a wird dementsprechend radial außen von einer inneren, die Innenkontur 2710b definierenden Mantelfläche des Luftleitelements 271b und radial innen von einer äußeren Mantelfläche des Führungselements 29 berandet. Der Luftleitspalt 29a ist hierbei bezogen auf die axiale Richtung x entlang der Düsenlängsachse DM sich düsenartig verengend respektive sich verjüngend ausgebildet und weist mit seinem in axialer Richtung x liegenden Ende in die Abströmrichtung 50. Der Luftleitspalt 29a ist hierbei derart dimensioniert und insbesondere sich verjüngend ausgeführt, dass mithilfe des Luftleitspalts 29a ein Luftstrahl (englisch "air jet") mit gegenüber dem an der Düsenaustrittsöffnung ausströmender Luft und gegenüber dem an der Düsenaustrittsöffnung austretenden Kraftstoff-Luft-Gemisch erhöhter Strömungsgeschwindigkeit in Richtung der Abströmrichtung 50 erzeugt wird. Der mithilfe des Luftleitspalts 29a erzeugte Luftstrahl berandet dann unter dem Abströmwinkel α zu der Düsenlängsachse DM verlaufend radial die Gemischströmung 5.1 und begrenzt als Teil der Leitströmung 5.2a/5.2b die Ausbreitung der Gemischströmung 5.1 in radialer Richtung.

Eine aus Teilströmen 5.2a und 5.2b aus dem Luftleitspalt 29a und dem Zusatzleitkanal 27c gebildeten Leitströmung 5.2a/5.2b übernimmt vorliegend die Funktion eines Strömungsleitelements 40 der Brennerdichtung 4 gemäß der Figur 3C, ohne dass hierfür aber ein starres und über das Luftleitelement 271b axial hinaus ragendes Strukturbauteil für die Führung der Gemischströmung 5.1 vorgesehen werden müsste.

Bei der Ausführungsvariante der Figur 2 ist im Übrigen nicht zwingend, dass sowohl über mindestens eine an der Brennerdichtung 4 vorgesehene Zuströmöffnung 42 als auch über ein düsenseitiges Führungselement 29 und den damit gebildeten Luftleitspalt 29a eine (Luft-) Leitströmung 5.2a/5.2b erzeugt wird. Eine Variante einer Leitströmungserzeugungseinrichtung LE auf Basis der Ausführungsvariante der Figur 2 kann auch lediglich eine der beiden Maßnahmen vorsehen. Dementsprechend kann beispielsweise ein Luftstrahl erzeugendes Führungselement 29, insbesondere ein umfangsseitig um die Düsenlängsachse DM umlaufendes und gegenüber dem Luftleitelement 271b radial innen liegendes Führungselement 29 zur Erzeugung einer Leitströmung 5.2a vorgesehen sein, ohne dass zusätzlich an der Brennerdichtung 4 eine Zuströmöffnung 42 vorgesehen ist.

Es versteht sich, dass die vorgeschlagene Lösung nicht auf die oben beschriebenen Ausführungsbeispiele beschränkt ist und verschiedene Modifikationen und Verbesserungen vorgenommen werden können, ohne von den hier beschriebenen Konzepten abzuweichen. Beliebige der Merkmale können separat oder in Kombination mit beliebigen anderen Merkmalen eingesetzt werden, sofern sie sich nicht gegenseitig ausschließen, und die Offenbarung erstreckt sich auf alle Kombinationen und Unterkombinationen eines oder mehrerer Merkmale, die hier beschrieben werden, und umfasst diese.

### Bezugszeichenliste

- 11: Niederdruckverdichter
- 12: Hochdruckverdichter
- 13: Hochdruckturbine
- 14: Mitteldruckturbine
- 15: Niederdruckturbine
- 2: Düse
- 20: Düsenhauptkörper
- 21: Düsenstamm
- 210: Kraftstoffzuleitung
- 22: Kraftstoffkammer
- 220: Kraftstoffpassage
- 23: Hitzeschild
- 24a, 24b: Luftkammer
- 25: Kraftstoffleitkanal
- 26: Erster Luftleitkanal
- 270a, 270b: Verdrallelement
- 2710b: Innenkontur
- 2711b: Äußere Mantelfäche
- 271b: Luftleitelement
- 27a: Zweiter Luftleitkanal
- 27b: Dritter Luftleitkanal
- 27c: Zusatzleitkanal
- 28: Dichtungselement
- 29: Führungselement
- 29a: Luftleitspalt
- 3: Brennkammer
- 30: Brennraum
- 300: Hitzeschild
- 31: Brennkammerkopf
- 310: Kopfplatte
- 4: Brennerdichtung
- 40: Strömungsleitelement
- 41: Lagerabschnitt
- 42: Zuströmöffnung
- 5.1: Gemischströmung
- 5.2, 5.2a, 5.2b: Leitströmung
- 50: Abströmrichtung
- A: Auslass
- B: Bypasskanal
- BKA: Brennkammerabschnitt
- C: Auslasskonus
- D: Wandstärke
- DF: Diffusor
- DM: Düsenlängsachse
- E: Einlass / Intake
- F: Fan
- F1, F2: Fluidstrom
- FC: Fangehäuse
- G: Außengehäuse
- H: Bezugsgerade
- L: Zugangsloch
- LE: Leitströmungserzeugungseinrichtung
- M: Mittelachse / Rotationsachse
- R: Brennkammerring
- S: Rotorwelle
- T: (Turbofan-)Triebwerk
- TT: Turbine
- V: Verdichter
- α: Abströmwinkel

## Patentansprüche

1. Brennkammerbaugruppe für ein Triebwerk (T),
- mit einer Brennkammer (3) mit einer Kopfplatte (300),
- einer Düse zur Bereitstellung eines Kraftstoff-Luft-Gemisches an einer Düsenaustrittsöffnung der Düse (2),
- einem Hitzeschild (300), und
- einer Brennerdichtung (4), die schwimmend zwischen dem Hitzeschild (300) und der Kopfplatte (310) gelagert ist und eine Durchgangsöffnung aufweist, in der die Düse (2) positioniert ist,
wobei die Düse (2) einen die Düsenaustrittsöffnung aufweisenden Düsenhauptkörper (20) umfasst, der sich entlang einer Düsenlängsachse (DM) erstreckt, und der Düsenhauptkörper (20) ferner wenigstens das Folgende umfasst:
- mindestens einen sich entlang der Düsenlängsachse (DM) erstreckenden inneren Luftleitkanal (26) zur Förderung von Luft an die Düsenaustrittsöffnung,
- mindestens einen gegenüber dem inneren Luftleitkanal (26), bezogen auf die Düsenlängsachse (DM), radial weiter außen liegenden Kraftstoffleitkanal (25) zur Förderung von Kraftstoff an die Düsenaustrittsöffnung und
- mindestens ein gegenüber dem inneren Luftleitkanal (26) und dem Kraftstoffleitkanal (25), bezogen auf die Düsenlängsachse (DM), radial außen liegendes Luftleitelement (271b) zur Führung an der Düsenaustrittsöffnung austretender Luft und des an der Düsenaustrittsöffnung austretenden Kraftstoff-Luft-Gemisches in eine radial nach außen weisende Abströmrichtung (50),
wobei zusätzlich zu dem mindestens einen Luftleitelement (271b) eine Leitströmungserzeugungseinrichtung (LE) vorgesehen ist, die eingerichtet ist, wenigstens eine Leitströmung (5.2, 5.2a, 5.2b) zu erzeugen, welche die an der Düsenaustrittsöffnung austretende Luft und das an der Düsenaustrittsöffnung austretende Kraftstoff-Luft-Gemisch radial berandet und einen maximalen Abströmwinkel (a) für die Abströmrichtung (50) bezüglich der Düsenlängsachse (DM) vorgibt und begrenzt, unter dem an der Düsenaustrittsöffnung austretende Luft und das an der Düsenaustrittsöffnung austretende Kraftstoff-Luft-Gemisch radial nach außen abströmen kann,
wobei
- die Leitströmungserzeugungseinrichtung (LE) zumindest teilweise an der Düse (2) und/oder an der Brennerdichtung (4) vorgesehen ist, und
- an der Brennerdichtung (4), für die Erzeugung wenigstens eines Teils der Leitströmung (5.2, 5.2b), mindestens eine Zuströmöffnung (42) der Leitströmungserzeugungseinrichtung (LE) vorgesehen ist, wobei die mindestens eine Zuströmöffnung (42) eingerichtet ist, über die Zuströmöffnung (42) einströmende Luft in Richtung auf eine radial äußere Mantelfläche (2711b) der Düse (2) zu leiten, wobei
a) die mindestens eine Zuströmöffnung (42) eine zur Düsenlängsachse (DM) radial nach innen geneigte Strömungsrichtung für über die Zuströmöffnung (42) einströmende Luft vorgibt, und zwischen einem Strömungsleitelement (40) der Brennerdichtung (4) und einem Abschnitt der radial äußeren Mantelfläche (2711b) der Düse (2) ein Zusatzleitkanal (27c) gebildet ist und die Zuströmöffnung (42) eingerichtet ist, über die Zuströmöffnung (42) einströmende Luft in den Zusatzleitkanal (27c) zu leiten, oder
b) über die mindestens eine Zuströmöffnung (42) in Richtung des Brennraums (30) einströmende Luft radial nach innen und auf die radial äußere Mantelfläche (2711b) der Düse (2) geleitet wird, und die Leitströmungserzeugungseinrichtung (LE) einen maximalen Abströmwinkel für die Abströmrichtung (50) bezüglich der Düsenlängsachse (DM) vorgibt, ohne dass ein in Richtung der Abströmrichtung (50) vorstehendes Strömungsleitelement (40) an der Brennerdichtung (4) ausgebildet ist.

2. Brennkammerbaugruppe nach Anspruch 1, wobei die Düse (2) zusätzlich zu dem inneren Luftleitkanal (26) mindestens einen weiteren, radial weiter außen liegenden Luftleitkanal (27b) aufweist, an dessen Ende das mindestens eine Luftleitelement (271b) vorgesehen ist.

3. Brennkammerbaugruppe nach Anspruch 2, wobei die Düse (2) zusätzlich zu dem inneren Luftleitkanal (26) mindestens zwei weitere, radial zueinander versetzte Luftleitkanäle (27a, 27b) aufweist, deren Enden gegenüber dem Luftleitelement (271b) radial weiter innen an dem Düsenhauptkörper (20) vorgesehen sind, und die Leitströmungserzeugungseinrichtung (LE) zusätzlich dem inneren Luftleitkanal (26) und den mindestens zwei weiteren Luftleitkanälen (27a, 27b) vorgesehen ist.

4. Brennkammerbaugruppe nach einem der vorhergehenden Ansprüche, wobei mindestens ein Bestandteil (29, 42) der Leitströmungserzeugungseinrichtung (LE), bezogen auf die Düsenlängsachse (DM), gegenüber dem mindestens einer radial außen liegenden Luftleitelement (271b) radial weiter innen oder radial weiter außen vorgesehen ist.

5. Brennkammerbaugruppe nach einem der vorhergehenden Ansprüche, wobei an der Düse (2), für die Erzeugung wenigstens eines Teils der Leitströmung (5.2a), mindestens ein Führungselement (29) der Leitströmungserzeugungseinrichtung (LE) vorgesehen ist.

6. Brennkammerbaugruppe nach Anspruch 5, wobei das mindestens eine Führungselement (29) unter Bildung eines Luftleitspaltes (29a) zu dem radial außen liegenden Luftleitelement (271b) beabstandet ist.

7. Brennkammerbaugruppe nach Anspruch 5 oder 6, wobei mittels des mindestens einen Führungselements (29) ein Luftstrahl für die Leitströmung (5.2a) erzeugbar ist.

8. Triebwerk mit mindestens einer Brennkammerbaugruppe nach einem der Ansprüche 1 bis 7.

## Claims

1. Combustion chamber assembly for an engine (T),
- having a combustion chamber (3) with a head plate (300),
- a nozzle for providing a fuel-air mixture at a nozzle outlet opening of the nozzle (2),
- a heat shield (300), and
- a combustor sealing (4) which is mounted in floating fashion between the heat shield (300) and the head plate (310) and which has a passage opening in which the nozzle (2) is positioned,
wherein the nozzle (2) comprises a nozzle main body (20) which has the nozzle outlet opening and which extends along a nozzle longitudinal axis (DM), and the nozzle main body (20) furthermore comprises at least following:
- at least one inner air-directing channel (26) which extends along the nozzle longitudinal axis (DM) and which serves for conveying air to the nozzle outlet opening,
- at least one fuel-directing channel (25) which is situated radially further to the outside than the inner air-directing channel (26) in relation to the nozzle longitudinal axis (DM) and which serves for conveying fuel to the nozzle outlet opening, and
- at least one air-directing element (271b) which is situated radially to the outside of the inner air-directing channel (26) and the fuel-directing channel (25) in relation to the nozzle longitudinal axis (DM) and which serves for guiding air emerging at the nozzle outlet opening and the fuel-air mixture emerging at the nozzle outlet opening along a radially outwardly pointing outflow direction (50),
wherein, in addition to the at least one air-directing element (271b), a directing-flow-generating device (LE) is provided which is configured to generate at least one directing flow (5.2, 5.2a, 5.2b) which radially borders the air emerging at the nozzle outlet opening and the fuel-air mixture emerging at the nozzle outlet opening and which specifies and limits a maximum outflow angle (α) for the outflow direction (50) with respect to the nozzle longitudinal axis (DM), at which angle the air emerging at the nozzle outlet opening and the fuel-air mixture emerging at the nozzle outlet opening can flow out along a radially outward direction,
wherein
- the directing-flow-generating device (LE) is provided at least partially at the nozzle (2) and/or at the combustor sealing (4), and,
- at least one inflow opening (42) of the directing-flow-generating device (LE) is provided at the combustor sealing (4) for the generation of at least a proportion of the directing flow (5.2, 5.2b), wherein the at least one inflow opening (42) is configured to conduct air flowing in via the inflow opening (42) along a direction to a radially outer lateral surface (2711b) of the nozzle (2), wherein
a) the at least one inflow opening (42) specifies a flow direction which is inclined radially inward in relation to the nozzle longitudinal axis (DM) for air flowing in via the inflow opening (42), and an additional directing channel (27c) is formed between a flow-directing element (40) of the combustor sealing (4) and a section of the radially outer lateral surface (2711b) of the nozzle (2), and the inflow opening (42) is configured to conduct air flowing in via the inflow opening (42) into the additional directing channel (27c), or
b) air flowing in via the at least one inflow opening (42) in the direction of the combustion chamber (30) is conducted radially inward and onto the radially outer lateral surface (2711b) of the nozzle (2), and the directing-flow-generating device (LE) specifies a maximum outflow angle for the outflow direction (50) in relation to to the nozzle longitudinal axis (DM), with no flow-directing element (40) which projects in the direction of the outflow direction (50) being formed on the combustor sealing (4).

2. Combustion chamber assembly according to Claim 1, wherein the nozzle (2) has, in addition to the inner air-directing channel (26), at least one further air-directing channel (27b) which is situated radially further to the outside and at the end of which the at least one air-directing element (271b) is provided.

3. Combustion chamber assembly according to Claim 2, wherein the nozzle (2) has, in addition to the inner air-directing channel (26), at least two further air-directing channels (27a, 27b) which are radially offset with respect to one another and the ends of which are provided on the nozzle main body (20) radially further to the inside than the air-directing element (271b), and the directing-flow-generating device (LE) is provided in addition to the inner air-directing channel (26) and the at least two further air-directing channels (27a, 27b).

4. Combustion chamber assembly according to any one of the preceding claims, wherein at least one constituent part (29, 42) of the directing-flow-generating device (LE) is provided radially further to the inside or radially further to the outside, in relation to the nozzle longitudinal axis (DM), than the at least one air-directing element (271b) situated radially at the outside.

5. Combustion chamber assembly according to any one of the preceding claims, wherein at least one guide element (29) of the directing-flow-generating device (LE) is provided on the nozzle (2) for the generation of at least a proportion of the directing flow (5.2a).

6. Combustion chamber assembly according to Claim 5, wherein the at least one guide element (29) is spaced apart, so as to form an air-directing gap (29a), from the air-directing element (271b) situated radially at the outside.

7. Combustion chamber assembly according to Claim 5 or 6, wherein an air jet for the directing flow (5.2a) can be generated by means of the at least one guide element (29).

8. Engine having at least one combustion chamber assembly according to any one of Claims 1 to 7.

## Revendications

1. Module de chambre de combustion pour un moteur (T),
- comportant une chambre de combustion (3) comportant une plaque de tête (300),
- une buse servant à fournir un mélange carburant/air au niveau d'un orifice de sortie de la buse (2),
- un bouclier thermique (300), et
- un joint d'étanchéité de brûleur (4) qui est monté flottant entre le bouclier thermique (300) et la plaque de tête (310) et comprend un orifice de passage dans lequel la buse (2) est positionnée,
dans lequel la buse (2) comporte un corps principal de buse (20) comprenant l'orifice de sortie de buse, lequel corps principal de buse s'étend le long d'un axe longitudinal de buse (DM), et le corps principal de buse (20) comporte en outre au moins les éléments suivants :
- au moins un canal de guidage d'air intérieur (26) s'étendant le long de l'axe longitudinal de buse (DM) pour le refoulement d'air vers l'orifice de sortie de buse,
- au moins un canal de guidage de carburant (25) situé radialement plus à l'extérieur par rapport au canal de guidage d'air intérieur (26), par rapport à l'axe longitudinal de buse (DM), pour le refoulement de carburant vers l'orifice de sortie de buse et
- au moins un élément de guidage d'air (271b) situé radialement à l'extérieur par rapport au canal de guidage d'air intérieur (26) et au canal de guidage de carburant (25), par rapport à l'axe longitudinal de buse (DM), pour le guidage de l'air sortant au niveau de l'orifice de sortie de buse et du mélange carburant/air sortant au niveau de l'orifice de sortie de buse dans un sens d'écoulement (50) orienté radialement vers l'extérieur, dans lequel, en plus de l'au moins un élément de guidage d'air (271b), un dispositif de génération d'écoulement de guidage (LE) est prévu, lequel est conçu pour générer au moins un écoulement de guidage (5.2, 5.2a, 5.2b), lequel borde radialement l'air sortant au niveau de l'orifice de sortie de buse et le mélange carburant/air sortant au niveau de l'orifice de sortie de buse et prédéfinit et limite un angle d'écoulement maximal (a) pour le sens d'écoulement (50) par rapport à l'axe longitudinal de buse (DM), angle suivant lequel l'air sortant au niveau de l'orifice de sortie de buse et le mélange carburant/air sortant au niveau de l'orifice de sortie de buse peuvent s'écouler radialement vers l'extérieur,
dans lequel
- le dispositif de génération d'écoulement de guidage (LE) est prévu au moins partiellement au niveau de la buse (2) et/ou au niveau du joint d'étanchéité de brûleur (4), et
- au niveau du joint d'étanchéité de brûleur (4), pour la génération d'au moins une partie de l'écoulement de guidage (5.2, 5.2b), au moins un orifice d'afflux (42) du dispositif de génération d'écoulement de guidage (LE) est prévu, dans lequel l'au moins un orifice d'afflux (42) est conçu pour guider l'air affluant via l'orifice d'afflux (42) en direction d'une surface d'enveloppe (2711b) radialement extérieure de la buse (2), dans lequel
a) l'au moins un orifice d'afflux (42) prédéfinit un sens d'écoulement incliné radialement vers l'intérieur par rapport à l'axe longitudinal de buse (DM) pour l'air affluant via l'orifice d'afflux (42), et un canal de guidage supplémentaire (27c) est formé entre un élément de guidage d'écoulement (40) du joint d'étanchéité de brûleur (4) et une partie de la surface d'enveloppe (2711b) radialement extérieure de la buse (2) et l'orifice d'afflux (42) est conçu pour guider l'air affluant via l'orifice d'afflux (42) dans le canal de guidage supplémentaire (27c), ou
b) l'air affluant via l'au moins un orifice d'afflux (42) en direction de la chambre de combustion (30) est guidé radialement vers l'intérieur et vers la surface d'enveloppe (2711b) radialement extérieure de la buse (2), et le dispositif de génération d'écoulement de guidage (LE) prédéfinit un angle d'écoulement maximal pour le sens d'écoulement (50) par rapport à l'axe longitudinal de buse (DM), sans qu'un élément de guidage d'écoulement (40) faisant saillie en direction du sens d'écoulement (50) ne soit réalisé au niveau du joint d'étanchéité de brûleur (4).

2. Module de chambre de combustion selon la revendication 1, dans lequel
la buse (2) comprend en plus du canal d'écoulement d'air intérieur (26) au moins un autre canal de guidage d'air (27b) situé radialement plus à l'extérieur, à l'extrémité duquel l'au moins un élément de guidage d'air (271b) est prévu.

3. Module de chambre de combustion selon la revendication 2, dans lequel
la buse (2) comprend en plus du canal de guidage d'air intérieur (26) au moins deux autres canaux de guidage d'air (27a, 27b) décalés radialement les uns par rapport aux autres, dont les extrémités sont prévues radialement plus à l'intérieur au niveau du corps principal de buse (20) par rapport à l'élément de guidage d'air (271b), et le dispositif de génération d'écoulement de guidage (LE) est prévu en plus du canal de guidage d'air intérieur (26) et des au moins deux autres canaux de guidage d'air (27a, 27b).

4. Module de chambre de combustion selon l'une quelconque des revendications précédentes, dans lequel au moins un composant (29, 42) du dispositif de génération d'écoulement de guidage (LE) est, par rapport à l'axe longitudinal de buse (DM), prévu radialement plus vers l'intérieur ou radialement plus vers l'extérieur par rapport à l'au moins un élément de guidage d'air (271b) situé radialement à l'extérieur.

5. Module de chambre de combustion selon l'une quelconque des revendications précédentes, dans lequel au niveau de la buse (2), pour la génération d'au moins une partie de l'écoulement de guidage (5.2a), au moins un élément de guidage (29) du dispositif de génération d'écoulement de guidage (LE) est prévu.

6. Module de chambre de combustion selon la revendication 5, dans lequel
l'au moins un élément de guidage (29) est espacé de l'élément de guidage d'air (271b) situé radialement à l'extérieur en formant un interstice de guidage d'air (29a) .

7. Module de chambre de combustion selon la revendication 5 ou 6, dans lequel
un jet d'air pour l'écoulement de guidage (5.2a) peut être généré au moyen de l'au moins un élément de guidage (29) .

8. Moteur comportant au moins un module de chambre de combustion selon l'une quelconque des revendications 1 à 7.
